(19) Europäisches Patentamt
European Patent Office
Office européen des brevets

(11) EP 3 274 393 B1

(12) **EUROPEAN PATENT SPECIFICATION**

(45) Date of publication and mention of the grant of the patent:
**24.04.2019 Bulletin 2019/17**

(21) Application number: **16718727.7**

(22) Date of filing: **23.03.2016**

(51) Int Cl.:
***C08G 64/30*** *(2006.01)*

(86) International application number:
**PCT/IB2016/051658**

(87) International publication number:
**WO 2016/151517 (29.09.2016 Gazette 2016/39)**

# (54) A MELT POLYMERIZATION PROCESS AND THE POLYCARBONATE PREPARED THEREFROM

SCHMELZPOLYMERISATIONSVERFAHREN UND DARAUS HERGESTELLTES POLYCARBONAT

PROCÉDÉ DE POLYMÉRISATION EN MASSE FONDUE ET POLYCARBONATE PRÉPARÉ À PARTIR DE CELUI-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2015 EP 15382141**

(43) Date of publication of application:
**31.01.2018 Bulletin 2018/05**

(73) Proprietor: **SABIC Global Technologies B.V.**
**4612 PX Bergen op Zoom (NL)**

(72) Inventor: **FERNANDEZ, Ignacio Vic**
**30390 La Aljorra (ES)**

(74) Representative: **Modiano, Micaela Nadia et al**
**Modiano & Partners**
**Thierschstrasse 11**
**80538 München (DE)**

(56) References cited:
**WO-A1-03/106533**
**WO-A1-2004/033530**
**US-A1- 2014 206 833**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 274 393 B1

## Description

### TECHNICAL FIELD

This application relates to a melt polymerization process to form a polycarbonate.

### BACKGROUND

The melt polycarbonate process is based on the continuous reaction of a dihydroxy compound and a carbonate source in a molten stage. The reaction can occur in a series of reactors where the combined effect of the catalyst, temperature, vacuum, and agitation allows for monomer reaction and removal of reaction by-products to displace the reaction equilibrium and make the polymer chain grow. A common polycarbonate that is made in melt polymerization reactions is that derived from bisphenol A (BPA) via reaction with diphenyl carbonate (DPC). This reaction can be catalyzed by tetra methyl ammonium hydroxide (TMAOH), which can be added in to a catalyst mixture prior to being introduced to a first polymerization unit and sodium hydroxide (NaOH), which can be added to the first reactor or upstream of the first reactor and after a monomer mixer.

Apart from the main polymerization reaction, there is a series of side reactions consisting of chain rearrangements of the polymer backbone that lead to branching that are often referred to as Fries rearrangement. The Fries species specifically found in bisphenol A melt polycarbonates are the ester type of structures A, B, and C.

Linear Fries:

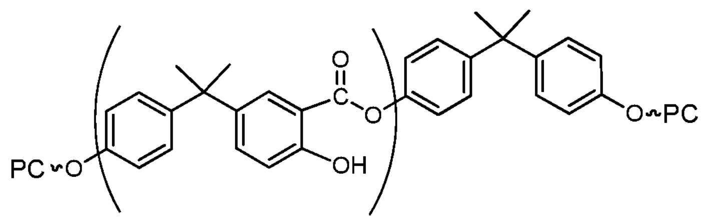

Branched Fries:

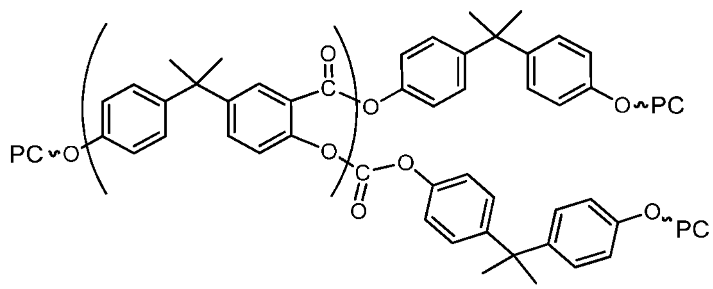

Acid Fries:

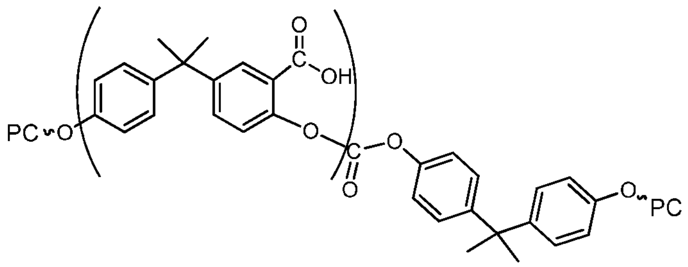

Fries reaction is induced by the combined effect of basic catalysts, temperature, and residence time, which makes the melt-produced polycarbonates inherently branched as compared with the interfacial polycarbonates since their manufacturing temperatures are lower.

Since high branching levels in the resin can have a negative effect on the mechanical properties of the polycarbonate (for example, on impact strength) and as some of the intermediate species formed during the Fries rearrangement process can be involved in the formation of color bodies, a polycondensation catalyst with better selectivity (less Fries promotion).

WO 2004/033530 discloses a process of melt polymerizing polycarbonate, said process comprising the steps of forming a catalyst mixture, wherein the mixture comprises a dihydroxy aromatic compound, a diaryl carbonate, and a catalyst compound including a tetraaryl phosphonium compound and an alkali metal hydroxide; adding the mixture to an oligomerization unit and forming an oligomer; and adding the oligomer to a polymerization unit to form the polycarbonate.

## BRIEF DESCRIPTION

Disclosed herein is a melt polycarbonate and methods for making the same.

The process of melt polymerizing polycarbonate according to the present invention, comprises forming a catalyst in a mixing unit, wherein the catalyst mixture comprises comprising a dihydroxy compound, a carbonate compound, and a monomer stage catalyst, wherein the monomer stage catalyst comprises one or both of a quaternary ammonium compound and a quaternary phosphonium compound other than tetraphenyl phosphonium phenoxide and tetraphenyl phosphonium acetate; adding the catalyst mixture to an oligomerization unit to form an oligomer; and adding the oligomer to a polymerization unit to form the polycarbonate, wherein a second catalyst is present in the oligomerization unit, wherein the second catalyst comprises one or both of tetraphenyl phosphonium phenoxide and tetraphenyl phosphonium acetate.

Also disclosed is a melt polycarbonate with a reduced Fries level which is prepared by forming a catalyst mixture comprising a dihydroxy compound, a carbonate compound, and a monomer stage catalyst, wherein the monomer stage catalyst comprises one or both of a quaternary ammonium compound and a quaternary phosphonium compound other than tetraphenyl phosphonium phenoxide and tetraphenyl phosphonium acetate; adding the catalyst mixture to an oligomerization unit to form an oligomer; and adding the oligomer to a polymerization unit to form the polycarbonate, wherein a second catalyst is present in the oligomerization unit, wherein the second catalyst comprises one or both of tetraphenyl phosphonium phenoxide and tetraphenyl phosphonium acetate.

The above described and other features are exemplified by the figure and the following detailed description.

## BRIEF DESCRIPTION OF THE DRAWING

Refer now to the figure, which is an exemplary embodiment, and wherein the like elements are numbered alike. FIG. 1 illustrates a process to melt polymerize polycarbonate.

## DETAILED DESCRIPTION

In melt polymerization processes for producing polycarbonate, a catalyst mixture comprising the reactants and a monomer stage catalyst, typically, TMAOH is generally prepared prior to polymerization. It was found that unlike most monomer stage catalysts that are unstable at elevated temperatures, for example, at temperatures of greater than 220°C and that are generally inactive in oligomerization stages of melt polymerization, tetraphenyl phosphonium acetate (TPPA) and tetraphenyl phosphonium phenoxide (TPPP) actually remain active during oligomerization stages of the melt polymerization, for example, at a temperature of 170 to 285°C. Using one or both of tetraphenyl phosphonium acetate and tetraphenyl phosphonium phenoxide as an only source of a catalyst in the catalyst mixture though, unfortunately resulted in increase in branching of the polycarbonate due to Fries rearrangement as compared to a to a melt polymerization

performed under the same conditions but where tetrabutyl phosphonium acetate (TBPA) is the only source of a catalyst in the catalyst mixture.

It was surprisingly found that melt polymerizing polycarbonate in the presence of a monomer stage catalyst that comprises one or both of a quaternary ammonium compound and a quaternary phosphonium compound other than TPPP and TPPA and a second catalyst that comprises one or both of TPPP and TPPA could result in a reduced branching level, for example, of less than or equal to 800 parts per million by weight (ppm), specifically, less than or equal to 500 ppm, more specifically, less than or equal to 100 ppm. For example, in addition to a monomer stage catalyst, the second catalyst can be added to the catalyst mixture in a concentration of less than or equal to 1 x $10^{-5}$, or less than or equal to 1 x $10^{-2}$, or 1 x $10^{-1}$ to 1 x $10^{-3}$, or 1 x $10^{-2}$ to 1 x $10^{-5}$, specifically, 1 x $10^{-3}$ to 1 x $10^{-4}$ moles per total mole of the dihydroxy compounds in the catalyst mixture; and/or the second catalyst can be added downstream of the catalyst mixture (for example, in first oligomerization vessel). When the second catalyst is added in an oligomerization vessel or just upstream of said vessel, it is herein referred to as an oligomerization stage catalyst.

It was further found that by employing the second catalyst, a reduced amount of an alkali catalyst could be used. As used herein the term alkali catalyst refers to a catalyst comprising a source of one or both of alkali ions and alkaline earth ions. For example, the melt polymerization can comprise adding 1 x 10° to 1 x $10^{-4}$ moles, specifically, 1 x $10^{-1}$ to 1 x $10^{-3}$ moles of metal hydroxide per mole of the dihydroxy compounds employed. The melt polymerization can comprise adding no alkali catalyst, thereby avoiding a need to add a catalyst quencher. The ability to melt polymerize polycarbonate in the absence of an alkali catalyst would reduce the amount of contaminants introduced to the melt polymerization (for example, arising from one or both of an impurity in the alkali catalyst and in the quencher) and would likely result in a melt polycarbonate with reduced yellowness index values.

It was also found that if an alkali catalyst is added, it can be added to a polymerization unit instead of to an oligomerization unit due to the activity of the second catalyst in the oligomerization unit. The melt polymerization can therefore comprise adding a monomer stage catalyst to a monomer mixing unit, adding the second catalyst comprising one or both of tetraphenyl phosphonium acetate and tetraphenyl phosphonium phenoxide to an oligomerization unit, and optionally adding an alkali catalyst, for example, to a polymerization unit. It is noted that adding a component to a unit refers to adding the component directly to that unit or just upstream of that unit such that the first unit the component enters is the unit to which the component is added.

"Polycarbonate" as used herein means a polymer having repeating structural carbonate units of formula (1)

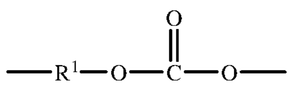 (1)

in which at least 60 percent of the total number of $R^1$ groups contain aromatic moieties and the balance thereof are aliphatic, alicyclic, or aromatic. Each $R^1$ can be a $C_{6-30}$ aromatic group, that is, contains at least one aromatic moiety. $R^1$ can be derived from an aromatic dihydroxy compound of the formula HO-$R^1$-OH, in particular of formula (2)

$$HO\text{-}A^1\text{-}Y^1\text{-}A^2\text{-}OH \qquad (2)$$

wherein each of $A^1$ and $A^2$ is a monocyclic divalent aromatic group and $Y^1$ is a single bond or a bridging group having one or more atoms that separate $A^1$ from $A^2$. One atom can separate $A^1$ from $A^2$. Specifically, each $R^1$ can be derived from a bisphenol of formula (3)

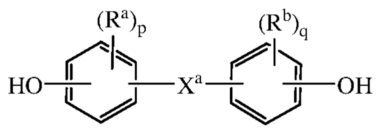 (3)

wherein $R^a$ and $R^b$ are each independently a halogen, $C_{1-12}$ alkoxy, or $C_{1-12}$ alkyl; and p and q are each independently integers of 0 to 4. It will be understood that when p or q is less than 4, the valence of each carbon of the ring is filled by hydrogen. Also in formula (3), $X^a$ is a bridging group connecting the two hydroxy-substituted aromatic groups, where the bridging group and the hydroxy substituent of each $C_6$ arylene group are disposed ortho, meta, or para (specifically para) to each other on the $C_6$ arylene group. The bridging group $X^a$ can be a single bond, -O-, -S-, -S(O)-, -S(O)$_2$-, -C(O)-, or a $C_{1-18}$ organic group. The $C_{1-18}$ organic bridging group can be cyclic or acyclic, aromatic or non-aromatic, and can further comprise heteroatoms such as halogens, oxygen, nitrogen, sulfur, silicon, or phosphorous. The $C_{1-18}$ organic group can be disposed such that the $C_6$ arylene groups connected thereto are each connected to a common alkylidene carbon or to different carbons of the $C_{1-18}$ organic bridging group. Each p and q can be 1, and $R^a$ and $R^b$ can

each be a $C_{1-3}$ alkyl group, specifically methyl, disposed meta to the hydroxy group on each arylene group.

$X^a$ can be a substituted or unsubstituted $C_{3-18}$ cycloalkylidene, a $C_{1-25}$ alkylidene of formula $-C(R^c)(R^d)-$ wherein $R^c$ and $R^d$ are each independently hydrogen, $C_{1-12}$ alkyl, $C_{1-12}$ cycloalkyl, $C_{7-12}$ arylalkyl, $C_{1-12}$ heteroalkyl, or cyclic $C_{7-12}$ heteroarylalkyl, or a group of the formula $-C(=R^e)-$ wherein $R^e$ is a divalent $C_{1-12}$ hydrocarbon group. Groups of this type include methylene, cyclohexylmethylene, ethylidene, neopentylidene, and isopropylidene, as well as 2-[2.2.1] -bicycloheptylidene, cyclohexylidene, cyclopentylidene, cyclododecylidene, and adamantylidene.

$X^a$ can be a $C_{1-18}$ alkylene, a $C_{3-18}$ cycloalkylene, a fused $C_{6-18}$ cycloalkylene, or a group of the formula $-B^1-G-B^2-$ wherein $B^1$ and $B^2$ are the same or different $C_{1-6}$ alkylene and G is a $C_{3-12}$ cycloalkylidene or a $C_{6-16}$ arylene. For example, $X^a$ can be a substituted $C_{3-18}$ cycloalkylidene of formula (4)

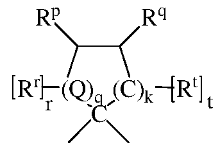

(4)

wherein $R^r$, $R^p$, $R^q$, and $R^t$ are each independently hydrogen, halogen, oxygen, or $C_{1-12}$ hydrocarbon groups; Q is a direct bond, a carbon, or a divalent oxygen, sulfur, or -N(Z)-where Z is hydrogen, halogen, hydroxy, $C_{1-12}$ alkyl, $C_{1-12}$ alkoxy, or $C_{1-12}$ acyl; r is 0 to 2, t is 1 or 2, q is 0 or 1, and k is 0 to 3, with the proviso that at least two of $R^r$, $R^p$, $R^q$, and $R^t$ taken together are a fused cycloaliphatic, aromatic, or heteroaromatic ring. It will be understood that where the fused ring is aromatic, the ring as shown in formula (4) will have an unsaturated carbon-carbon linkage where the ring is fused. When k is one and i is 0, the ring as shown in formula (4) contains 4 carbon atoms, when k is 2, the ring as shown in formula (4) contains 5 carbon atoms, and when k is 3, the ring contains 6 carbon atoms. Two adjacent groups (e.g., $R^q$ and $R^t$ taken together) can form an aromatic group, and $R^q$ and $R^t$ taken together can form one aromatic group and $R^r$ and $R^p$ taken together can form a second aromatic group. When $R^q$ and $R^t$ taken together form an aromatic group, $R^p$ can be a double-bonded oxygen atom, i.e., a ketone.

Bisphenols wherein $X^a$ is a cycloalkylidene of formula (4) can be used in the manufacture of polycarbonates containing phthalimidine carbonate units of formula (1a)

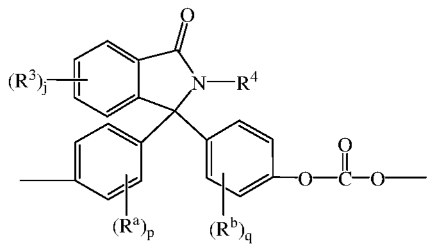

(1a)

wherein $R^a$, $R^b$, p, and q are as in formula (3), $R^3$ is each independently a $C_{1-6}$ alkyl, j is 0 to 4, and $R_4$ is hydrogen, $C_{1-6}$ alkyl, or a substituted or unsubstituted phenyl, for example, a phenyl substituted with up to five $C_{1-6}$ alkyls. For example, the phthalimidine carbonate units are of formula (1b)

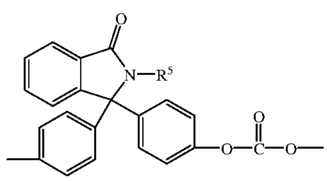

(1b)

wherein $R^5$ is hydrogen, phenyl optionally substituted with up to five 5 $C_{1-6}$ alkyls, or $C_{1-4}$ alkyl. In formula (1b), $R^5$ can be hydrogen, methyl, or phenyl, specifically, phenyl. Carbonate units (1b) wherein $R^5$ is phenyl can be derived from 2-phenyl-3,3'-bis(4-hydroxy phenyl)phthalimidine (also known as 3,3-bis(4-hydroxyphenyl)-2-phenylisoindolin-1-one, or N-phenyl phenolphthalein bisphenol ("PPPBP")).

Other bisphenol carbonate repeating units of this type are the isatin carbonate units of formula (1c) and (1d)

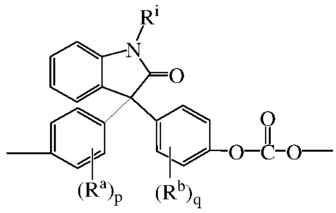
(1c)

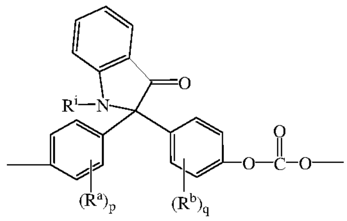
(1d)

wherein $R^a$ and $R^b$ are each independently $C_{1-12}$ alkyl, p and q are each independently 0 to 4, and $R^1$ is $C_{1-12}$ alkyl, phenyl, optionally substituted with 1 to 5 $C_{1-10}$ alkyl, or benzyl optionally substituted with 1 to 5 $C_{1-10}$ alkyl. Each $R^a$ and $R^b$ can be methyl, p and q can each independently be 0 or 1, and $R^i$ is $C_{1-4}$ alkyl or phenyl.

Other examples of bisphenol carbonate units derived from bisphenols (3) wherein $X^a$ is a substituted or unsubstituted $C_{3-18}$ cycloalkylidene (4) include the cyclohexylidene-bridged, alkyl-substituted bisphenol of formula (1e)

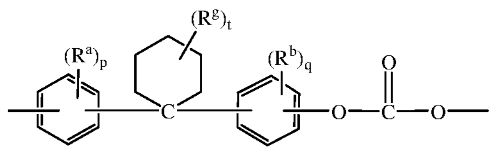
(1e)

wherein $R^a$ and $R^b$ are each independently $C_{1-12}$ alkyl, $R^g$ is $C_{1-12}$ alkyl, p and q are each independently 0 to 4, and t is 0 to 10. At least one of each of $R^a$ and $R^b$ can be disposed meta to the cyclohexylidene bridging group. Each $R^a$ and $R^b$ can independently be $C_{1-4}$ alkyl, $R^g$ is $C_{1-4}$ alkyl, p and q are each 0 or 1, and t is 0 to 5. $R^a$, $R^b$, and $R^g$ can each be methyl, p and q can each be 0 or 1, and t can be 0 or 3, specifically, 0.

Examples of other bisphenol carbonate units derived from bisphenol (3) wherein $X^a$ is a substituted or unsubstituted $C_{3-18}$ cycloalkylidene include adamantyl units of formula (1f) and fluorenyl units of formula (1g)

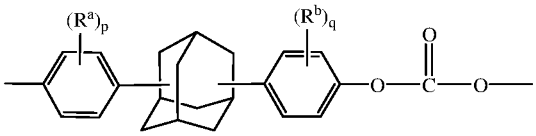
(1f)

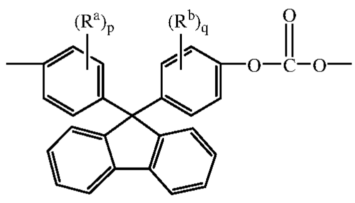
(1g)

wherein $R^a$ and $R^b$ are each independently $C_{1-12}$ alkyl, and p and q are each independently 1 to 4. At least one of each of $R^a$ and $R^b$ can be disposed meta to the cycloalkylidene bridging group. $R^a$ and $R^b$ can each be independently $C_{1-3}$ alkyl, and p and q can be each 0 or 1; specifically, $R^a$, $R^b$ can each be methyl, p and q are each 0 or 1, and when p and q are 1, the methyl group can be disposed meta to the cycloalkylidene bridging group. Carbonates containing units (1a) to (1g) are useful for making polycarbonates with high glass transition temperatures (Tg) and high heat distortion temperatures.

Other useful dihydroxy compounds of the formula HO-$R^1$-OH include aromatic dihydroxy compounds of formula (6)

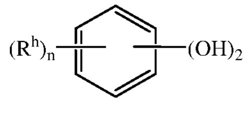
(6)

wherein each $R^h$ is independently a halogen atom, $C_{1-10}$ hydrocarbyl group such as a $C_{1-10}$ alkyl, a halogen-substituted $C_{1-10}$ alkyl, a $C_{6-10}$ aryl, or a halogen-substituted $C_{6-10}$ aryl, and n is 0 to 4. The halogen is usually bromine.

Some illustrative examples of specific dihydroxy compounds include the following: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantane, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalimide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, or the like, or combinations comprising at least one of the foregoing dihydroxy compounds.

Specific examples of bisphenol compounds of formula (3) include 1,1-bis(4-hydroxyphenyl) methane, 1,1-bis(4-hydroxyphenyl) ethane, 2,2-bis(4-hydroxyphenyl) propane (hereinafter "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-2-methylphenyl) propane, 1,1-bis(4-hydroxy-t-butylphenyl) propane, 3,3-bis(4-hydroxyphenyl) phthalimidine, 2-phenyl-3,3-bis(4-hydroxyphenyl) phthalimidine (PPPBP), and 1,1-bis(4-hydroxy-3-methylphenyl)cyclohexane (DMBPC). Combinations comprising at least one of the foregoing dihydroxy compounds can also be used. The polycarbonate can be a linear homopolymer derived from bisphenol A, in which each of $A^1$ and $A^2$ is p-phenylene and $Y^1$ is isopropylidene in formula (3).

The polycarbonate herein is prepared via the melt polymerization of a bisphenol and a carbonate precursor. Exemplary carbonate precursors include a carbonyl halide such as carbonyl bromide or carbonyl chloride (phosgene) a bishaloformate of a dihydroxy compound (e.g., the bischloroformate of bisphenol A, hydroquinone ethylene glycol, neopentyl glycol, or the like), and diaryl carbonates. Combinations comprising at least one of the foregoing types of carbonate precursors can also be used. The diaryl carbonate ester can be diphenyl carbonate, or an activated diphenyl carbonate having electron-withdrawing substituents on each aryl, such as bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, bis(4-acetylphenyl) carboxylate, or a combination comprising at least one of the foregoing. The diaryl carbonate ester (also referred to as the carbonate compound) can be free of an activated diphenyl carbonate having electron-withdrawing substituents on each aryl. For example, the diaryl carbonate ester can be free of bis(4-nitrophenyl)carbonate, bis(2-chlorophenyl)carbonate, bis(4-chlorophenyl)carbonate, bis(methyl salicyl)carbonate, bis(4-methylcarboxylphenyl) carbonate, bis(2-acetylphenyl) carboxylate, and bis(4-acetylphenyl) carboxylate. The diaryl carbonate ester can be free of bis(methyl salicyl)carbonate. As used herein, "can be free of' refers to none of the compound being added in the melt polymerization, for example, less than or equal to 10 ppm, for example, 0 ppm of the compound being present.

In the melt polymerization method, the polycarbonate can be prepared by co-reacting, in a molten state, a dihydroxy reactant and a carbonate precursor in the presence of a transesterification catalyst. The reaction can be carried out in typical polymerization equipment, such as a continuously stirred reactor (CSTR), plug flow reactor, wire wetting fall polymerizers, free fall polymerizers, horizontal polymerizers, wiped film polymerizers, BANBURY mixers, single or twin screw extruders, or a combination comprising one or more of the foregoing. Volatile monohydric phenol is removed from the molten reactants by distillation and the polymer is isolated as a molten residue. Melt polymerization can be conducted as a batch process or as a continuous process. In either case, the melt polymerization conditions used can comprise two or more distinct reaction stages.

For example, the polymerization can comprise an oligomerization stage in which the starting dihydroxy aromatic compound and diaryl carbonate are converted into an oligomeric polycarbonate and a second reaction stage also referred to as a polymerization stage wherein the oligomeric polycarbonate formed in the oligomerization stage is converted to high molecular weight polycarbonate. The oligomerization stage can comprise 1 or more, specifically, 2 or more, more specifically, 2 to 4 oligomerization units (for example, 2 to 4 continuously stirred tanks). When 2 or more oligomerization units are present in series, one or both of an increase in temperature and a decrease in pressure can occur from one unit to the next. The polymerization stage can comprise 1 or more, specifically, 2 or more, more specifically, 2 polymerization units (for example, 2 horizontal or wire wetting fall polymerizers). The polymerization stage can comprise one or more polymerization units that can polymerize the polycarbonate to a molecular weight of, for example, 20,000 to

50,000 Daltons. After formation of a polycarbonate, the polycarbonate composition can then be optionally quenched and a devolatilized in a devolatization unit, where the molecular weight of the polycarbonate does not significantly increase (for example, the molecular weight does not increase by greater than 10 weight percent (wt%)) and a temperature, a pressure, and a residence time are used to reduce the concentration of low molecular weight components (such as those with a molecular weight of less than 1,000 Daltons). The oligomerization unit is herein defined as a oligomerization unit that results in polycarbonates oligomers with a number average molecular weight of less than or equal to 8,000 Daltons and a polymerization unit is herein defined as a polymerization unit that produces polycarbonate with a number average molecular weight of greater than 8,000 Daltons. It is noted that while less than or equal to 8,000 Daltons is used here to define a molecular weight achieved in the oligomerization stage, one skilled in the art readily understands that said molecular weight is used to define an oligomerization stage, where the oligomer molecular weight could be greater than 8,000 Daltons. A "staged" polymerization reaction condition can be used in continuous polymerization systems, wherein the starting monomers are oligomerized in a first reaction vessel and the oligomeric polycarbonate formed therein is continuously transferred to one or more downstream reactors in which the oligomeric polycarbonate is converted to high molecular weight polycarbonate. Typically, in the oligomerization stage the oligomeric polycarbonate produced has a number average molecular weight of 1,000 to 7,500 Daltons. In one or more subsequent polymerization stages the number average molecular weight (Mn) of the polycarbonate can be increased to, for example, 8,000 and 25,000 Daltons (using polycarbonate standard), specifically, 13,000 to 18,000 Daltons.

Typically, solvents are not used in the process, and the reactants dihydroxy aromatic compound and the diaryl carbonate are in a molten state. The reaction temperature can be 100 to 350 degrees Celsius (°C), specifically, 180 to 310°C. The pressure can be at atmospheric pressure, supra-atmospheric pressure, or a range of pressures from atmospheric pressure to 15 torr in the initial stages of the reaction, and at a reduced pressure at later stages, for example, 0.2 to 15 torr. Likewise, the polymerization can occur in a series of polymerization vessels that can each individually have increasing temperature and/or vacuum. For example, an oligomerization stage can occur at a temperature of 100 to 280°C, specifically, 140 to 240°C and a polymerization stage can occur at a temperature of 240 to 350°C, specifically, 280 to 300°C or 240 to 270°C or 250 to 310°C, where the temperature in the polymerization stage is greater than the temperature in the oligomerization stage. The reaction time from the initial oligomerization unit to the final polymerization unit is generally 0.1 to 15 hours. A final polymerization unit as used herein refers to a final polymerization unit in the melt polymerization where the last increase in molecular weight occurs. For example, the quenching agent can be added to the polycarbonate resin after a final polymerization (e.g., after a point where the Mw of the polycarbonate resin will increase by less than or equal to 10%), and optionally, before any melt filtering.

Likewise, an oligomerization can occur at a pressure of greater than or equal to 10 kiloPascals absolute (kPa(a)) or the oligomerization can comprise at least two oligomerization units where a first oligomerization unit can have a pressure of greater than or equal to 10 kPa(a) and a second oligomerization can have a pressure of 1.5 to 9 kPa(a), where the first oligomerization unit is upstream of the second oligomerization unit, where one or more oligomerization units can be located before, in between, or after said polymerization units.

The polymerization stage following the oligomerization stage can comprise polymerizing in one or two polymerization units. The first polymerization unit can be at a temperature of 240 to 350°C, specifically, 260 to 310°C and a pressure of 0.1 to 1 kPa(a). The second polymerization unit can be at a temperature of 240 to 350°C, specifically, 260 to 300°C and a pressure of less than or equal to 0.5 kPa(a). The polycarbonate can be devolatized after a final polymerization. A final polymerization as used herein refers to the polymerization where the last increase in molecular weight occurs. For example, after the final polymerization, the Mw of the polycarbonate increases by less than or equal to 10%.

After a final polymerization vessel (also referred to as a final polymerization unit), the polymer can be introduced to a reactor, extruded, subjected to filtration in a melt filter, or a combination comprising one or more of the foregoing. It is noted that the melt filter can be located before or after the extruder. For example, the melt polymerization process for the manufacture of a polycarbonate composition can comprise: melt polymerizing a dihydroxy reactant and a carbonate compound to produce a molten reaction product; quenching the molten reaction product; filtering the molten reaction product in a melt filter upstream of any extruders; optionally, introducing an additive to form a mixture; and extruding the mixture to form the polycarbonate composition. Likewise, the melt polymerization process for the manufacture of a polycarbonate composition can comprise: melt polymerizing a polycarbonate; introducing a quencher composition and optionally an additive to form a mixture; and extruding the mixture to form the polycarbonate composition.

The polycarbonate can be, for example, a bisphenol A polycarbonate with a weight average molecular weight of 21,800 Daltons with a melt flow of 24 to 32 g/10 min (ASTM D1238-04, 300°C, 2.16 kg).

The polycarbonate can have a melt flow of 4 to 40 g/10 min, for example, 4.5 to 15 g/10 min or 15 to 35 g/10 min as determined by ASTM D1238-04 at 300°C, 1.5 kg. The polycarbonate can have a melt flow of 5 to 15 g/10 min as determined by ASTM D1238-04 at 250°C, 1.5 kg.

Catalysts used in the melt transesterification polymerization production of polycarbonates can include the monomer stage catalyst, the second catalyst, and optionally an alkali catalyst comprising a source of one or both of alkali ions and alkaline earth ions.

The alkali catalyst is typically more thermally stable than the monomer stage catalyst, and therefore can be used throughout transesterification, including during oligomerization, and after oligomerization, e.g., in the polymerization vessels, during polymerization. The alkali catalyst can be added to a polymerization at any stage in the polymerization, for example, upstream of, and/or directly to, and/or after a monomer mixing unit; and/or upstream of, and/or directly to, and/or after a polymerization unit (for example, to a first stage polymerization unit and/or the second reaction stage polymerization unit). Likewise, the catalyst addition process can be free of an alkali catalyst addition step.

The melt polymerization can performed in the absence of the alkali catalyst. The melt polymerization can be free of an alkali catalyst addition step. When an alkali catalyst is added, the alkali catalyst can be added to an oligomerization unit. When an alkali catalyst is added, the alkali catalyst can be added to a polymerization unit.

The alkali catalyst comprises a source of one or both of alkali ions and alkaline earth ions. The sources of these ions include alkaline earth hydroxides such as magnesium hydroxide and calcium hydroxide. Sources of alkali metal ions can include the alkali metal hydroxides such as illustrated by lithium hydroxide, sodium hydroxide, potassium hydroxide, and combinations comprising at least one of the foregoing. Examples of alkaline earth metal hydroxides are calcium hydroxide, magnesium hydroxide, and combinations comprising at least one of the foregoing. The alkali catalyst can comprise sodium hydroxide. Other possible sources of alkaline earth and alkali metal ions include salts of carboxylic acids (such as sodium acetate) and derivatives of ethylene diamine tetraacetic acid (EDTA) (such as EDTA tetrasodium salt, and EDTA magnesium disodium salt), as well as combinations comprising at least one of the foregoing. For example, the alkali catalyst can comprise alkali metal salt(s) of a carboxylic acid, alkaline earth metal salt(s) of a carboxylic acid, or a combination comprising at least one of the foregoing. In another example, the alkali catalyst comprises $Na_2Mg$ EDTA or a salt thereof.

The alkali catalyst can also, or alternatively, comprise salt(s) of a non-volatile inorganic acid. For example, the alkali catalyst can comprise salt(s) of a non-volatile inorganic acid such as $NaH_2$ $PO_3$, $NaH_2PO_4$, $Na_2HPO_3$, $KH_2PO_4$, $CsH_2PO_4$, $Cs_2HPO_4$, and combinations comprising at least one of the foregoing. Alternatively, or in addition, the alkali catalyst can comprise mixed alkali metal salt(s) of phosphoric acid, such as $NaKHPO_4$, $CsNaHPO_4$, $CsKHPO_4$, and combinations comprising at least one of the foregoing. The alkali catalyst can comprise $KNaHPO_4$, wherein a molar ratio of Na to K is 0.5 to 2.

The alkali catalyst typically will be used in an amount sufficient to provide $1 \times 10^{-2}$ to $1 \times 10^{-8}$ moles, specifically, $1 \times 10^{-4}$ to $1 \times 10^{-7}$ moles of metal hydroxide per mole of the dihydroxy compounds employed.

The monomer stage catalyst comprises a quaternary ammonium compound, a quaternary phosphonium compound other than TPPP and TPPA, or a combination comprising at least one of the foregoing. The quaternary ammonium compound can be a compound of the structure $(R^4)_4N^+X^-$, wherein each $R^4$ is the same or different, and is a $C_{1-20}$ alkyl, a $C_{4-20}$ cycloalkyl, or a $C_{4-20}$ aryl; and $X^-$ is an organic or inorganic anion, for example, a hydroxide, halide, carboxylate, sulfonate, sulfate, formate, carbonate, or bicarbonate. Examples of organic quaternary ammonium compounds include tetramethyl ammonium hydroxide, tetrabutyl ammonium hydroxide, tetramethyl ammonium acetate, tetramethyl ammonium formate, tetrabutyl ammonium acetate, and combinations comprising at least one of the foregoing.

The quaternary phosphonium compound can be a compound of the structure $(R^5)_4P^+X^-$, wherein each $R^5$ is the same or different, and is a $C_{1-20}$ alkyl, a $C_{4-20}$ cycloalkyl, or a $C_{4-20}$ aryl; and $X^-$ is an organic or inorganic anion, for example, a hydroxide, phenoxide, halide, carboxylate such as acetate or formate, sulfonate, sulfate, formate, carbonate, or bicarbonate. Where $X^-$ is a polyvalent anion such as carbonate or sulfate, it is understood that the positive and negative charges in the quaternary ammonium and phosphonium structures are properly balanced. For example, where $R^{20}$ to $R^{23}$ are each methyls and $X^-$ is carbonate, it is understood that $X^-$ represents $2(CO_3^{-2})$.

Examples of organic quaternary phosphonium compounds include tetramethyl phosphonium hydroxide, tetramethyl phosphonium acetate, tetramethyl phosphonium formate, tetrabutyl phosphonium hydroxide, tetraethyl phosphonium acetate, tetrapropyl phosphonium acetate, tetrabutyl phosphonium acetate, tetrapentyl phosphonium acetate, tetrahexyl phosphonium acetate, tetraheptyl phosphonium acetate, tetraoctyl phosphonium acetate, tetradecyl phosphonium acetate, tetradodecyl phosphonium acetate, tetratolyl phosphonium acetate, tetramethyl phosphonium benzoate, tetraethyl phosphonium benzoate, tetrapropyl phosphonium benzoate, tetraphenyl phosphonium benzoate, tetraethyl phosphonium formate, tetrapropyl phosphonium formate, tetraphenyl phosphonium formate, tetramethyl phosphonium propionate, tetraethyl phosphonium propionate, tetrapropyl phosphonium propionate, tetramethyl phosphonium butyrate, tetraethyl phosphonium butyrate, and tetrapropyl phosphonium butyrate, and combinations comprising at least one of the foregoing. The monomer stage catalyst can comprise tetrabutyl phosphonium acetate.

The amount of monomer stage catalyst employed is typically based upon the total number of moles of dihydroxy compound employed in the polymerization reaction. When referring to the ratio of catalyst, for example, phosphonium salt, to all dihydroxy compounds employed in the polymerization reaction, it is convenient to refer to moles of phosphonium salt per mole of the dihydroxy compound(s), meaning the number of moles of phosphonium salt divided by the sum of the moles of each individual dihydroxy compound present in the reaction mixture. The amount of monomer stage catalyst (e.g., organic ammonium or phosphonium salts) employed typically will be $1 \times 10^{-2}$ to $1 \times 10^{-5}$, specifically, $1 \times 10^{-3}$ to $1 \times 10^{-4}$ moles per total mole of the dihydroxy compounds in the catalyst mixture. The amount of monomer stage catalyst

can be 1 x $10^{-5}$, or less than or equal to 1 x $10^{-2}$, or 1 x $10^{-1}$ to 1 x $10^{-3}$, or 1 x $10^{-2}$ to 1 x $10^{-5}$, specifically, 1 x $10^{-3}$ to 1 x $10^{-4}$ moles per total mole of the dihydroxy compounds in the catalyst mixture.

The second catalyst comprises one or both of tetraphenyl phosphonium acetate and tetraphenyl phosphonium phenoxide.

The monomer stage catalyst and the second catalyst can each independently have a reduced concentration of alkali metal salts. For example, the reduced concentration can be one or more of: a) less than or equal to 2,000 ppm of sodium, specifically, less than or equal to 1,675 ppm of sodium, specifically, less than or equal to 500 ppm of sodium, more specifically, less than or equal to 100 ppm of sodium, even more specifically, less than or equal to 30 ppm of sodium; b) less than or equal to 500 ppm of cesium, specifically, less than or equal to 300 ppm of cesium, more specifically, less than or equal to 135 ppm of cesium; and c) less than or equal to 100 ppm of potassium, specifically, less than or equal to 45 ppm of potassium; based on the total weight of the respective catalyst.

The monomer stage catalyst and the second catalyst can each independently comprise an alkali metal compound, wherein if the metal compound comprises sodium sulfate, the amount of sodium can be less than or equal to 1,690 ppm, specifically, less than or equal to 1,670 ppm based on the total weight of the catalyst compound; if the metal compound comprises cesium sulfate, the amount of cesium can be less than or equal to 275 ppm, specifically, less than or equal to 252 ppm based on the total weight of the catalyst compound; if the metal compound comprises sodium hydroxide, the amount of sodium can be less than or equal to 35 ppm, specifically, less than or equal to 29 ppm based on the total weight of the catalyst compound; if the metal compound comprises potassium hydroxide, the amount of potassium can be less than or equal to 50 ppm, specifically, less than or equal to 43 ppm based on the total weight of the catalyst compound; if the metal compound comprises cesium hydroxide, the amount of cesium can be less than or equal to 140 ppm, specifically, less than or equal to 132 ppm based on the total weight of the respective catalyst; or a combination comprising one or more of the foregoing.

The monomer stage catalyst and the second catalyst can each independently comprise an alkali metal compound, wherein the amount of sodium can be greater than or equal to 1 ppm, or greater than or equal to 30 ppm, or greater than or equal to 100 ppm; the amount of cesium can be greater than or equal to 10 ppm, or greater than or equal to 30 ppm, or greater than or equal to 50 ppm; the amount of potassium can be greater than 0 ppm, or greater than or equal to 5 ppm, or greater than or equal to 10 ppm; or a combination comprising one or more of the foregoing, wherein the metal amounts are based on the weight of the catalyst.

The monomer stage catalyst can be added to a monomer mixing unit located upstream of a polymerization unit. The catalyst mixture can comprise less than or equal to 500 ppm of one or both of water and an alkyl alcohol based on the total weight of the catalyst mixture, for example, arising from one or more of the dihydroxy compound, the carbonate compound, and the atmosphere in the monomer mixing unit. The water and/or the alkyl alcohol level can be reduced prior to adding the monomer stage catalyst.

The dihydroxy compound and the carbonate compound in the catalyst mixture can be present in a molar ratio of 0.5:1 to 1.5:1, specifically, 0.9:1 to 1.1:1, more specifically, 0.99:1 to 1.01:1.

The method of adding the monomer stage catalyst can comprise adding a dihydroxy compound, a carbonate compound, and the monomer stage catalyst compound to form the catalyst mixture in any order. The catalyst mixture can be prepared such that the monomer stage catalyst is not exposed to a water and/or an alkyl alcohol level of greater than 250 ppm based on the total weight of the catalyst mixture. The catalyst mixture can comprise less than or equal to 250 ppm, specifically, less than or equal to 130 ppm, more specifically, less than or equal to 50 ppm of one or both of an alkyl alcohol and water based on the total weight of the mixture, for example, comprising the monomer stage catalyst, the dihydroxy compound, and the carbonate compound. The adding can be performed in an inert atmosphere, for example, under nitrogen and/or argon. As used herein, an inert atmosphere refers to a gaseous atmosphere, wherein the gaseous atmosphere is unreactive with the components in the mixture.

The water and/or an alkyl alcohol level can be reduced in one or more reducing steps prior to adding the monomer stage catalyst. The reducing the water and/or the alkyl alcohol level can be accomplished by maintaining a temperature and pressure in the monomer mixing unit above the boiling point of water and/or an alkyl alcohol for an amount of time to reduce the water and/or an alkyl alcohol level. For example, the reducing the water level at atmospheric pressure can be accomplished by maintaining a temperature in the monomer mixing unit of greater than or equal to 100°C for an amount of time to reduce the water level. The temperature in the monomer mixing unit can be 100 to 250°C, specifically, 150 to 200°C, more specifically, 165 to 185°C.

The method of adding the monomer stage catalyst can comprise adding a dihydroxy compound and a carbonate compound to the monomer mixing unit at a temperature greater than or equal to the melting temperature of the carbonate compound; reducing a water and/or an alkyl alcohol level in the catalyst mixture to less than or equal to 450 ppm, specifically, less than or equal to 260 ppm, more specifically, less than or equal to 90 ppm based on the total weight of the carbonate compound and/or less than or equal to 400 ppm, specifically, less than or equal to 240 ppm, more specifically, less than or equal to 80 ppm based on the total weight of the dihydroxy compound; and adding the monomer stage catalyst to form the catalyst mixture.

The method of adding the monomer stage catalyst can comprise adding a dihydroxy compound and reducing a water and/or an alkyl alcohol level to less than or equal to 400 ppm, specifically, less than or equal to 240 ppm, more specifically, less than or equal to 80 ppm based on the total weight of the dihydroxy compound; adding a carbonate compound and reducing one or both of the alkyl alcohol and the water level to less than or equal to 450 ppm, specifically, less than or equal to 260 ppm, more specifically, less than or equal to 90 ppm based on the total weight of the carbonate compound and adding the monomer stage catalyst to form the catalyst mixture. The adding the carbonate compound can occur before or after adding the dihydroxy compound.

The method of adding the monomer stage catalyst can comprise adding a carbonate compound comprising less than or equal to 450 ppm, specifically, less than or equal to 260 ppm, more specifically, less than or equal to 90 ppm of water and/or an alkyl alcohol based on the total weight of the carbonate compound; adding a dihydroxy compound comprising less than or equal to 400 ppm, specifically, less than or equal to 240 ppm, more specifically, less than or equal to 80 ppm of water and/or an alkyl alcohol based on the total weight of the dihydroxy compound; and adding the monomer stage catalyst in any order to form the catalyst mixture.

It is noted that the second catalyst can be added in the same or different step as adding the monomer stage catalyst.

The monomer mixing unit can be at atmospheric pressure. The monomer mixing unit can be maintained at a temperature of 100 to 250°C, specifically, 150 to 200°C, more specifically, 165 to 185°C.

The second catalyst can be added downstream of the catalyst mixture. For example, the second catalyst can be added just upstream of a first oligomerization unit and/or directly into an oligomerization unit. The second catalyst can be added just upstream of and/or directly into a first and/or a second oligomerization unit. The second catalyst can be added at a pressure of greater than or equal to 10 kPa(a) or 1.5 to 9 kPa(a). The second catalyst can be added at a temperature of 100 to 280°C, specifically, 140 to 240°C. The second catalyst can be added to an oligomerization unit at a pressure of greater than or equal to 10 kPa(a) or 1.5 to 9 kPa(a). The second catalyst can be added to an oligomerization unit at a temperature of 100 to 280°C, specifically, 140 to 240°C. The second catalyst can be added to a polycarbonate oligomer with a number average molecular weight of 600 to 7,500 Daltons, specifically, 800 to 2,000 Daltons using polycarbonate standards.

The method can result in a change in endcapping ratio of a polycarbonate of less than or equal to 5%, specifically, less than or equal to 3%, more specifically, less than or equal to 1% relative to a polycarbonate polymerized under the same conditions, but that is polymerized in the presence of no measurable amount of water and an alkyl alcohol (based upon measurement standards as of November 15, 2014) in the catalyst mixture. As used herein, the endcapping ratio in percent *(%EC)* is determined by the following equation:

$$\%EC = 100 - \left(\frac{ppmOH + Mn}{340{,}000}\right)$$

wherein *ppm OH* is the amount of hydroxyl end groups in ppm and *Mn* is the number averaged molecular weight based on polycarbonate standards in Daltons. The *ppm OH* can be determined by Fourier Transform Infrared Spectroscopy (FTIR), for example, on a Perkin Elmer FTIR Spectrum One Device by dissolving 0.5 grams (g) of the polycarbonate sample in 25 milliliters (mL) of dried chloroform, measuring the absorbance at a wavelength of 3,584 inverse centimeters ($cm^{-1}$) using a univariable calibration, and normalizing the absorbance by dividing the absorbance by the absorbance at 2,779 $cm^{-1}$.

FIG. 1 illustrates a melt polycarbonate polymerization system. Dihydroxy reactant A, carbonate compound B, and monomer stage catalyst C (that can comprise the second catalyst) are added to monomer mixing unit 10 to form a catalyst mixture. The monomer mixing unit 10 can be maintained at 160 to 180°C and atmospheric pressure. The catalyst mixture and additional carbonate compound B, where the additional carbonate compound B can be the same or different as that added to the monomer mixing unit, is sent to first oligomerization vessel 20. Second catalyst K can be added in one or more of the streams illustrated. Optional alkali catalyst G can be added to the melt polymerization in one or more of the streams illustrated. First oligomerization unit 20 can operate at a temperature of 230 to 260°C and a vacuum of 14 to 20 kPa(a) and phenol byproduct from polymerization reaction is removed. The mixture then flows into second oligomerization unit 21 that can operate at a higher temperature of 270 to 290°C and a deeper vacuum of 3 to 5 kPa(a), e.g., for further phenol removal. The oligomer, as formed in the oligomerization unit 21, then flows to first polymerization unit 30 that can operate at a temperature of 290 to 315°C and 1 to 0.25 kPa(a). The effluent from first polymerization unit 30 can be directed to second polymerization unit 31 that can operate at 290 to 315°C and 0.05 to 0.15 kPa(a) to result in the formation of a molten polycarbonate. It is noted that phenol by-product E and any solvent can be removed, for example, by a scrubber 50, from oligomerization unit 20, 21 and/or from polymerization unit 30, 31. It is noted that while FIG. 1 illustrates polymerization vessels 30, 31 to be horizontal polymerization units, polymerization units 30 and 31 can likewise each independently be, for example, a wire wetting fall polymerization unit or a continuously stirred tank.

The polycarbonate then flows to extruder 40 where optional quencher H and additive I are added to the molten polycarbonate. Extruder 40 can be a twin-screw extruder and at least one of the components can be incorporated into the composition by feeding directly into extruder 40 at the throat and/or downstream of the throat through, for example, a sidestuffer. Additive I can also be compounded into a masterbatch with a desired polymeric resin and fed into extruder 40. After extruder 40, the resulting polycarbonate is pumped through melt filter 60 that can be a stainless steel filter and that has a 2.5 to 50 micrometer, specifically, a 10 to 40 micrometer, more specifically, a 15 to 30 micrometer mesh size, e.g., to remove gels and other impurities from polycarbonate J. The product can then be stranded in a die-head and finally pelletized and packaged. The pellets, so prepared, when cutting the extrudate can be, for example, one-fourth inch long or less as desired. Such pellets can be used for subsequent molding, shaping, or forming. Typical nominal throughput per line ranges from 3 to 25 tons/hour.

The polymerization process can comprise a section of parallel polymerization, where parallel polymerization refers to the splitting of a polycarbonate stream into two or more streams that may or may not experience the same polymerization conditions thereafter (i.e., they can attain different molecular weights, have different additives added thereto, etc.). For example, polycarbonate can be prepared in a first portion of the polymerization process; a stream comprising polycarbonate can be split into two or more streams and directed to 2 or more parallel operating lines. For example, a method can comprise polymerizing polycarbonate in a series of oligomerization polymerization units; a stream exiting the oligomerization stage can be split into two streams: A and B, where stream A is directed to polymerization unit A and stream B is directed to polymerization unit B. Likewise, a method can comprise polymerizing polycarbonate in a series of oligomerization units followed by polymerizing in a series of polymerization units; a stream exiting the polymerization stage can be split into two streams: A and B, where stream A is directed to extruder A and stream B is directed to extruder B. Likewise, a method can comprise polymerizing polycarbonate in a series of oligomerization units followed by polymerizing in a series of two polymerization units; a stream exiting the first polymerization unit can be split into two streams: A and B, where stream A is directed to second polymerization unit A and stream B is directed to second polymerization unit B. In any of the aforementioned scenarios, a quencher composition can be added to one or both of streams A and B, where the quencher composition can be the same or different. One skilled in the art can readily envision other embodiments comprising more than 2 parallel streams and embodiments where the streams are split at different locations.

A quencher composition can be added at one or more locations in the present melt preparation of the polycarbonate to reduce the activity of the alkali catalyst. The quencher composition comprises a quenching agent (also referred to herein as a quencher). Conversely, the melt polymerization can occur in the absence of an alkali catalyst and can therefore be free of a quencher.

The quenching agent can comprise a sulfonic acid ester such as an alkyl sulfonic ester of the formula $R_1SO_3R_2$ wherein $R_1$ is hydrogen, $C_1$-$C_{12}$ alkyl, $C_6$-$C_{18}$ aryl, or $C_7$-$C_{19}$ alkylaryl, and $R_2$ is $C_1$-$C_{12}$ alkyl, $C_6$-$C_{18}$ aryl, or $C_7$-$C_{19}$ alkylaryl. Examples of alkyl sulfonic esters include benzenesulfonate, p-toluenesulfonate, methylbenzene sulfonate, ethylbenzene sulfonate, n-butyl benzenesulfonate, octyl benzenesulfonate and phenyl benzenesulfonate, methyl p-toluenesulfonate, ethyl p-toluenesulfonate, n-butyl p-toluene sulfonate, octyl p-toluenesulfonate and phenyl p- toluenesulfonate. The sulfonic acid ester can comprise alkyl tosylates such as n-butyl tosylate. The sulfonic acid ester can be present in the quencher composition in an amount of 0.1 to 10 volume percent (vol%), specifically, 0.1 to 5 vol%, more specifically, 0.5 to 2 vol% based on the total volume of the quencher composition.

The quenching agent can comprise boric acid esters (e.g., $B(OCH_3)_3$, $B(OCH_2CH_3)_3$, and $B(OC_6H_6)_3$), zinc borate, boron phosphate, aluminum stearate, aluminum silicate, zirconium carbonate, zirconium $C_1$-$C_{12}$ alkoxides, zirconium hydroxycarboxylates, gallium phosphide, gallium antimonide, germanium oxide, $C_1$-$C_{32}$ organogermanium compounds, $C_4$-$C_{32}$ tetraorganotin tin compound, $C_6$-$C_{32}$ hexaorganotin compound (e.g., $[(C_6H_6O)Sn(CH_2CH_2CH_2CH_3)_2]_2O$), $Sb_2O_3$, antimony oxide, $C_1$-$C_{32}$ alkylantimony, bismuth oxide, $C_1$-$C_{12}$ alkylbismuth, zinc acetate, zinc stearate, $C_1$-$C_{32}$ alkoxytitanium, and titanium oxide, phosphoric acid, phosphorous acid, hypophosphorous acid, pyrophosphoric acid, polyphosphoric acid, boric acid, hydrochloric acid, hydrobromic acid, sulfuric acid, sulfurous acid, adipic acid, azelaic acid, dodecanoic acid, L-ascorbic acid, aspartic acid, benzoic acid, formic acid, acetic acid, citric acid, glutamic acid, salicylic acid, nicotinic acid, fumaric acid, maleic acid, oxalic acid, benzenesulfinic acid, $C_1$-$C_{12}$ dialkyl sulfates (e.g., dimethyl sulfate and dibutyl sulfate), sulfonic acid phosphonium salts of the formula $(R^aSO_3^-)(PR^b_4)^+$ wherein $R^a$ is hydrogen, $C_1$-$C_{12}$ alkyl, $C_6$-$C_{18}$ aryl, or $C_7$-$C_{19}$ alkylaryl, and each $R^b$ is independently hydrogen, $C_1$-$C_{12}$ alkyl or $C_6$-$C_{18}$ aryl, sulfonic acid derivatives of the formula $A^1$-$(Y^1$-$SO_3X^1)_m$ wherein $A^1$ is a $C_1$-$C_{40}$ hydrocarbon group having a valence of m, $Y^1$ is a single bond or an oxygen atom, $X^1$ is a secondary or tertiary alkyl group of the formula - $CR^{15}R^{16}R^{17}$, a metal cation of one equivalent, an ammonium cation (e.g., $NR^b_3{}^+$ wherein each $R^b$ is independently hydrogen, $C_1$-$C_{12}$ alkyl or $C_6$-$C_{18}$ aryl), or a phosphonium (e.g., $PR^b_4{}^+$ wherein each $R^b$ is independently hydrogen, $C_1$-$C_{12}$ alkyl or $C_6$-$C_{18}$ aryl) wherein $R^{15}$ is a hydrogen atom or an alkyl group having 1 to 5 carbon atoms, $R^{16}$ is a hydrogen atom, a phenyl group or an alky group having 1 to 5 carbon atoms, and $R^{17}$ is the same as or different from $R^{15}$ and has the same definition as $R^{15}$, provided that two of $R^{15}$, $R^{16}$, and $R^{17}$ cannot be hydrogen atoms, and m is an integer of 1 to 4, provided that when $Y^1$ is a single bond, all of $X^1$ in an amount of m cannot be metal cations of one equivalent, a compound of the

formula $^+X^2$-$A^2$-$Y^1$-$SO_3^-$ wherein $A^2$ is a divalent hydrocarbon group, $^+X^2$ is a secondary, tertiary or quaternary ammonium cation or a secondary (e.g., tertiary or quaternary phosphonium cation, and $Y^1$ is a single bond or an oxygen atom, a compound of the formula $A^3$-$(^+X^3)_n$·(R-$Y^1$-$SO_3^-$ $)_n$ wherein $A^3$ is a $C_1$-$C_{40}$ hydrocarbon group having a valence of n, $^+X^3$ is a secondary, tertiary or quaternary ammonium cation (e.g., $NR^b{}_3{}^+$ wherein each $R^b$ is independently hydrogen, $C_1$-$C_{12}$ alkyl or $C_6$-$C_{18}$ aryl), or a secondary, tertiary or quaternary phosphonium cation (e.g., $PR^b{}_4{}^+$ wherein each $R^b$ is independently hydrogen, $C_1$-$C_{12}$ alkyl or $C_6$-$C_{18}$ aryl), R is a monovalent $C_1$-$C_{40}$ hydrocarbon group, n is an integer of 2 to 4, and $Y^1$ is a single bond or an oxygen atom, a compound of the formula $A^5$-$Ad^1$-$A^4$-$(Ad^2$-$A^5)_\ell$ wherein $A^5$ is a monovalent or divalent $C_1$-$C_{40}$ hydrocarbon group, $A^4$ is a divalent $C_1$-$C_{40}$ hydrocarbon group, each of $Ad^1$ and $Ad^2$ is independently an acid anhydride group selected from -$SO_2$-O-$SO_2$-, -$SO_2$-O-CO- and -CO-O-$SO_2$-, and $\ell$ is 0 or 1, provided that when $\ell$ is O, -$(Ad^2$-$A^5)\ell$ is a hydrogen atom or a bond between $A^4$ and $A^5$, in which $A^5$ is a divalent hydrocarbon group or a single bond, aminosulfonic esters having the formula $R_aR_b$N-A-$SO_3R_c$, wherein $R_a$ and $R_b$ are each independently hydrogen, $C_1$-$C_{12}$ alkyl, $C_6$-$C_{22}$ aryl, $C_7$-$C_{19}$ alkylaryl or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), $R_c$ is hydrogen, and A is $C_1$-$C_{12}$ alkyl, $C_6$-$C_{18}$ aryl, or $C_{17}$-$C_{19}$ alkylaryl (e.g., compounds such as N-(2-hydroxyethyl) piperazine-N'-3-propanesulfonic acid, 1,4,-piperazinebis (ethanesulfonic acid), and 5-dimethylamino-1-napthalenesulfonic acid), ammonium sulfonic esters of the formula $R_aR_bR_cN^+$-A-$SO_3^-$, wherein $R_a$, $R_b$, are each independently hydrogen, $C_1$-$C_{12}$ alkyl, $C_1$-$C_{12}$ aryl, $C_7$-$C_{19}$ alkylaryl, or $R_a$ and $R_b$, either singly or in combination, form an aromatic or non-aromatic heterocyclic compound with N (e.g., pyrrolyl, pyridinyl, pyrimidyl, pyrazinyl, carbazolyl, quinolinyl, imidazoyl, piperazinyl, oxazolyl, thiazolyl, pyrazolyl, pyrrolinyl, indolyl, purinyl, pyrrolydinyl, or the like), $R_c$ is a hydrogen, and A is $C_1$-$C_{12}$ alkyl, $C_6$-$C_{18}$ aryl, or $C_7$-$C_{19}$ alkylaryl, sulfonated polystyrene, methyl acrylate-sulfonated styrene copolymer, and combinations comprising at least one of the foregoing.

The quencher composition can be added in a solid or a liquid form. When in the liquid form, the quencher composition can be added, for example, via an addition system. The addition system can comprise a first drum; a buffer drum; a dosing pump; a filter; an injector, or a combination comprising one or more of the foregoing, where one or both of the first drum and the buffer drum can comprise an agitator and/or a heating system. For example, the quencher and a liquid carrier can be added to the first drum and then added to a buffer drum. From the buffer drum, the liquid quencher composition can be injected to the polymerization system via an injector located in one or more of a polymerization unit, a reactor, a transfer line, a mixer, and an extruder. The pumping of the quencher composition to a dosing pump can be controlled by a main distribution loop, where the addition of the quencher composition can be monitored with a flow meter, either continuously or intermittently. The pumping can further comprise a controller for automated monitoring of the flow meter and adjustment of the amount of the quencher composition to the polymerization unit. The liquid quencher composition can be added to the polycarbonate at a pressure of greater than or equal to 2 bars, specifically, greater than or equal to 3 bars, more specifically, 3 to 100 bar. The liquid quencher composition can likewise be added by spraying the liquid onto a solid polycarbonate substrate. The liquid quencher composition can be filtered before it is added to the polymerization system. The quencher composition can be mixed with the polycarbonate for a period of time of greater than or equal to 5 seconds prior to the addition to the polycarbonate of any additives having a reactive OH group or reactive ester group.

An additive can further be added at one or more locations in the present melt preparation of the polycarbonate. For example, the additive can be added upstream of a polymerization unit, directly into a polymerization unit (for example, at an inlet, in a side feeder, in an outlet, or a combination comprising one or more of the foregoing), downstream of a polymerization unit, in a reactor that is not polymerizing polycarbonate, upstream of an extruder, directly into an extruder (for example, at the throat of the extruder, in a side feeder, in an outlet, or a combination comprising one or more of the foregoing), downstream of an extruder, or a combination comprising one or more of the foregoing. The additive can be added as part of the quencher composition or can be added separately. The additive can be added in a molten state or can be added after an extruded polycarbonate is re-melted. The additive can be filtered prior to being added into the polymerization unit.

The additive can comprise, for example, an impact modifier, a flow modifier, a filler (e.g., a particulate polytetrafluoroethylene (PTFE), glass, carbon, a mineral, or metal), a reinforcing agent (e.g., glass fibers), an antioxidant, a heat stabilizer, a light stabilizer, an ultraviolet (UV) agent (such as a UV light stabilizer and a UV absorbing additive), a plasticizer, a lubricant, a release agent (such as a mold release agent (such as glycerol monostearate, pentaerythritol stearate, glycerol tristearate, stearyl stearate, and the like)), an antistatic agent, an antifog agent, an antimicrobial agent, a colorant (e.g., a dye or pigment), a surface effect additive, a radiation stabilizer, a flame retardant, an anti-drip agent (e.g., a PTFE-encapsulated styrene-acrylonitrile copolymer (TSAN)), or a combination comprising one or more of the foregoing. For example, a combination of a heat stabilizer, mold release agent, and ultraviolet light stabilizer can be used. In general, the additives are used in the amounts generally known to be effective. For example, the total amount of the additive composition (other than any impact modifier, filler, or reinforcing agent) can be 0.001 to 10.0 weight percent (wt%), or 0.01 to 5 wt%, each based on the total weight of the polymer in the polymerized composition.

The polycarbonate composition can have a light transparency of greater than 90% as determined using 3.2 mm thick samples using ASTM D1003-00, Procedure B using CIE standard illuminant C, with unidirectional viewing. Accordingly, when the quenched composition has such a light transparency, it is herein referred to as an "optical grade" composition.

The present disclosure is further described in the below embodiments.

Embodiment 1: A process of melt polymerizing polycarbonate, comprises forming a catalyst mixture in a mixing unit, wherein the catalyst mixture comprises a dihydroxy compound, a carbonate compound, and a monomer stage catalyst, wherein the monomer stage catalyst comprises one or both of a quaternary ammonium compound and a quaternary phosphonium compound other than tetraphenyl phosphonium phenoxide and tetraphenyl phosphonium acetate; adding the catalyst mixture to an oligomerization unit to form an oligomer; and adding the oligomer to a polymerization unit to form the polycarbonate, wherein a second catalyst is present in the oligomerization unit, wherein the second catalyst comprises one or both of tetraphenyl phosphonium phenoxide and tetraphenyl phosphonium acetate.

Embodiment 2: The process of Embodiment 1, wherein the catalyst mixture further comprises the second catalyst.

Embodiment 3: The process of any of the preceding embodiments, further comprising adding the second catalyst downstream of the mixing unit, for example, downstream of the catalyst mixture and upstream of an oligomerization unit; and/or to an oligomerization unit, specifically, to a first oligomerization unit.

Embodiment 4: The process of any of the preceding embodiments, wherein the second catalyst is added at one or both of a temperature of 100 to 280°C and a pressure of greater than or equal to 10 kPa(a), or wherein the second catalyst is only added at one or both of the temperature of 100 to 280°C and the pressure of greater than or equal to 10 kPa(a).

Embodiment 5: The process of any of the preceding embodiments, wherein the second catalyst is added to an oligomer with a number average molecular weight of 600 to 7,500 Daltons based on polycarbonate standards, or wherein the second catalyst is only added to an oligomer with a number average molecular weight of 600 to 7,500 Daltons based on polycarbonate standards, or wherein the second catalyst is added to an oligomer with a number average molecular weight of greater than or equal to 600 Daltons based on polycarbonate standards.

Embodiment 6: The process of any of the preceding embodiments, the monomer stage catalyst comprises tetrabutyl phosphonium acetate, or wherein the monomer stage catalyst is tetrabutyl phosphonium acetate.

Embodiment 7: The process of any of the preceding embodiments, further comprising adding an alkali catalyst comprising a source of alkali and/or alkaline earth metal compounds; or wherein the process is free of an alkali catalyst comprising a source of alkali and/or alkaline earth metal compounds.

Embodiment 8: The process of Embodiment 7, wherein the alkali catalyst is added to the polymerization unit, specifically, to a first polymerization unit.

Embodiment 9: The process of any of Embodiments 1-7, wherein the process does not comprise adding an alkali catalyst comprising a source of alkali and/or alkaline earth metal compounds.

Embodiment 10: The process of Embodiment 9, wherein the process does not comprise adding a quencher.

Embodiment 11: The process of any of the preceding embodiments, wherein the adding the dihydroxy compound, the carbonate compound, and the monomer stage catalyst comprises adding the dihydroxy compound, adding the carbonate compound, reducing the water and/or an alkyl alcohol level to a reduced level of less than or equal to 450 ppm based on the total weight of the carbonate compound and/or less than or equal to 400 ppm based on the total weight of the dihydroxy compound; and adding the monomer stage catalyst, for example, wherein the monomer stage catalyst is added after reducing the water and/or the alkyl alcohol level to the reduced level.

Embodiment 13: The process of any of the preceding embodiments, wherein one or both of the carbonate compound comprises less than or equal to 450 ppm of water and/or an alkyl alcohol based on the total weight of the carbonate compound and/or the dihydroxy compound comprises less than or equal to 400 ppm of water and/or an alkyl alcohol based on the total weight of the dihydroxy compound prior to adding.

Embodiment 13: The process of any of the preceding embodiments, wherein one or both of the monomer stage catalyst and the second catalyst comprises a metal compound, wherein the metal comprises at least one of sodium, potassium, cesium; wherein if the metal compound comprises sodium sulfate, the amount of sodium is 0 to 1,690 ppm; if the metal compound comprises cesium sulfate, the amount of cesium is 0 to 275 ppm; if the metal compound comprises sodium hydroxide, the amount of sodium is 0 to 35 ppm; if the metal compound comprises potassium hydroxide, the amount of potassium is 0 to 50 ppm; if the metal compound comprises cesium hydroxide, the amount of cesium is 0 to 140 ppm all based on the weight of the respective monomer stage catalyst and second catalyst.

Embodiment 14: A polycarbonate formed from the process of any of the preceding embodiments.

Embodiment 15: The polycarbonate of Embodiment 14, wherein the polycarbonate has a branching level of less than or equal to 800 ppm.

Embodiment 16: An article comprising the polycarbonate of any of Embodiments 14-15.

As used herein, when referring to "reactive" or a "reactive group", e.g., having a reactive OH group or a reactive ester group, the reactivity is with respect to polycarbonate.

In general, the invention may alternately comprise, consist of, or consist essentially of, any appropriate components herein disclosed. The invention may additionally, or alternatively, be formulated so as to be devoid, or substantially free, of any components, materials, ingredients, adjuvants or species used in the prior art compositions or that are otherwise not necessary to the achievement of the function and/or objectives of the present invention.

All ranges disclosed herein are inclusive of the endpoints, and the endpoints are independently combinable with each other (e.g., ranges of "up to 25 wt%, or, more specifically, 5 to 20 wt%", is inclusive of the endpoints and all intermediate values of the ranges of "5 to 25 wt%," etc.). "Combination" is inclusive of blends, mixtures, alloys, reaction products, and the like. Furthermore, the terms "first," "second," and the like, herein do not denote any order, quantity, or importance, but rather are used to denote one element from another. The terms "a" and "an" and "the" herein do not denote a limitation of quantity, and are to be construed to cover both the singular and the plural, unless otherwise indicated herein or clearly contradicted by context. The suffix "(s)" as used herein is intended to include both the singular and the plural of the term that it modifies, thereby including one or more of that term (e.g., the film(s) includes one or more films). Reference throughout the specification to "one embodiment," "another embodiment," "an embodiment," and so forth, means that a particular element (e.g., feature, structure, and/or characteristic) described in connection with the embodiment is included in at least one embodiment described herein, and may or may not be present in other embodiments. In addition, it is to be understood that the described elements may be combined in any suitable manner in the various embodiments. Disclosure of a narrower range or more specific group in addition to a broader range is not a disclaimer of the broader range or larger group.

While particular embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications variations, improvements, and substantial equivalents.

## Claims

1. A process of melt polymerizing polycarbonate, comprising:

   forming a catalyst mixture in a mixing unit, wherein the catalyst mixture comprises a dihydroxy compound, a carbonate compound, and a monomer stage catalyst, wherein the monomer stage catalyst comprises one or both of a quaternary ammonium compound and a quaternary phosphonium compound other than tetraphenyl phosphonium phenoxide and tetraphenyl phosphonium acetate;
   adding the catalyst mixture to an oligomerization unit and forming an oligomer; and
   adding the oligomer to a polymerization unit to form the polycarbonate,
   wherein a second catalyst is present in the oligomerization unit, wherein the second catalyst comprises one or both of tetraphenyl phosphonium phenoxide and tetraphenyl phosphonium acetate.

2. The process of Claim 1, wherein the catalyst mixture further comprises the second catalyst.

3. The process of any of the preceding claims, further comprising adding the second catalyst downstream of the mixing unit.

4. The process of any of the preceding claims, wherein the second catalyst is added at one or both of a temperature of 100 to 280°C and a pressure of greater than or equal to 10 kPa(a), or wherein the second catalyst is only added at one or both of the temperature of 100 to 280°C and the pressure of greater than or equal to 10 kPa(a).

5. The process of any of the preceding claims, wherein the second catalyst is added to an oligomer with a number average molecular weight of 600 to 7,500 Daltons based on polycarbonate standards, or wherein the second catalyst is only added to an oligomer with a number average molecular weight of 600 to 7,500 Daltons based on polycarbonate standards, or wherein the second catalyst is added to an oligomer with a number average molecular weight of greater than or equal to 600 Daltons based on polycarbonate standards.

6. The process of any of the preceding claims, wherein the monomer stage catalyst comprises tetrabutyl phosphonium acetate, or wherein the monomer stage catalyst is tetrabutyl phosphonium acetate.

7. The process of any of the preceding claims, further comprising adding an alkali catalyst comprising a source of alkali

and/or alkaline earth metal compounds.

**8.** The process of Claim 7, wherein the alkali catalyst is added to the polymerization unit.

**9.** The process of any of Claims 1-7, wherein the process does not comprise adding an alkali catalyst comprising a source of alkali and/or alkaline earth metal compounds; or wherein the process is free of an alkali catalyst comprising a source of alkali and/or alkaline earth metal compounds.

**10.** The process of Claim 9, wherein the process does not comprise adding a quencher.

**11.** The process of any of the preceding claims, wherein the adding the dihydroxy compound, the carbonate compound, and the monomer stage catalyst comprises adding the dihydroxy compound, adding the carbonate compound, reducing the water and/or an alkyl alcohol level to a reduced level of less than or equal to 450 ppm based on the total weight of the carbonate compound and/or less than or equal to 400 ppm based on the total weight of the dihydroxy compound; and adding the monomer stage catalyst, for example, wherein the monomer stage catalyst is added after reducing the water and/or the alkyl alcohol level to the reduced level.

**12.** The process of any of the preceding claims, wherein the carbonate compound comprises less than or equal to 450 ppm of water and/or an alkyl alcohol based on the total weight of the carbonate compound; and/or the dihydroxy compound comprises less than or equal to 400 ppm of water and/or an alkyl alcohol based on the total weight of the dihydroxy compound prior to adding.

**13.** The process of any of the preceding claims, wherein one or both of the monomer stage catalyst and the second catalyst comprises a metal compound, wherein the metal comprises at least one of sodium, potassium, cesium; wherein if the metal compound comprises sodium sulfate, the amount of sodium is 0 to 1,690 ppm; if the metal compound comprises cesium sulfate, the amount of cesium is 0 to 275 ppm; if the metal compound comprises sodium hydroxide, the amount of sodium is 0 to 35 ppm; if the metal compound comprises potassium hydroxide, the amount of potassium is 0 to 50 ppm; if the metal compound comprises cesium hydroxide, the amount of cesium is 0 to 140 ppm all based on the weight of the respective monomer stage catalyst and second catalyst.

**Patentansprüche**

**1.** Ein Verfahren zur Schmelzpolymerisation von Polycarbonat, das Folgendes umfasst:

Formen einer Katalysatormischung in einer Mischeinheit, wobei die Katalysatormischung eine Dihydroxyverbindung, eine Carbonatverbindung und einen Monomerstadium-Katalysator umfasst, wobei der Monomerstadium-Katalysator eine quaternäre Ammoniumverbindung und/oder eine quaternäre Phosphoniumverbindung außer Tetraphenylphosphoniumoxid und Tetraphenylphosphoniumacetat umfasst;
Hinzufügen der Katalysatormischung zu einer Oligomerisationseinheit und Bilden eines Oligomers und Hinzufügen des Oligomers zu einer Polymerisationseinheit, um das Polycarbonat zu bilden,
wobei ein zweiter Katalysator in der Oligomerisationseinheit vorhanden ist, wobei der zweite Katalysator Tetraphenylphosphoniumoxid und/oder Tetraphenylphosphoniumacetat umfasst.

**2.** Das Verfahren gemäß Anspruch 1, wobei die Katalysatormischung weiter den zweiten Katalysator umfasst.

**3.** Das Verfahren gemäß einem beliebigen der obigen Ansprüche, das weiter das Hinzufügen des zweiten Katalysators stromabwärts von der Mischeinheit umfasst.

**4.** Das Verfahren gemäß einem beliebigen der obigen Ansprüche, wobei der zweite Katalysator bei einem oder beiden einer Temperatur von 100 bis 280°C und einem Druck von mindestens 10 kPa(a) hinzugefügt wird, oder wobei der zweite Katalysator nur bei einem oder beiden der Temperatur von 100 bis 280°C und dem Druck von mindestens 10 kPa(a) hinzugefügt wird.

**5.** Das Verfahren gemäß einem beliebigen der obigen Ansprüche, wobei der zweite Katalysator zu einem Oligomer mit einem Zahlenmittel-Molekulargewicht von 600 bis 7.500 Dalton hinzugefügt wird, basierend auf Polycarbonatstandards, oder wobei der zweite Katalysator nur zu einem Oligomer mit einem Zahlenmittel-Molekulargewicht von 600 bis 7.500 Dalton hinzugefügt wird, basierend auf Polycarbonatstandards, oder wobei der zweite Katalysator zu

einem Oligomer mit einem Zahlenmittel-Molekulargewicht von mindestens 600 Dalton hinzugefügt wird, basierend auf Polycarbonatstandards.

**6.** Das Verfahren gemäß einem beliebigen der obigen Ansprüche, wobei der Monomerstufen-Katalysator Tetrabutylphosphoniumacetat umfasst oder wobei der Monomerstufen-Katalysator Tetrabutylphosphoniumacetat ist.

**7.** Das Verfahren gemäß einem beliebigen der obigen Ansprüche, das weiter das Hinzufügen eines Alkalikatalysators umfasst, der eine Quelle für Alkali- und/oder Erdalkalimetallverbindungen umfasst.

**8.** Das Verfahren gemäß Anspruch 7, wobei der Alkalikatalysator zu der Polymerisationseinheit hinzugegeben wird.

**9.** Das Verfahren gemäß einem beliebigen der Ansprüche 1-7, wobei das Verfahren nicht das Hinzufügen eines Alkalikatalysators umfasst, der eine Quelle für Alkali- und/oder Erdalkalimetallverbindungen umfasst; oder wobei das Verfahren frei von einem Alkalikatalysator ist, der eine Quelle für Alkali- und/oder Erdalkalimetallverbindungen umfasst.

**10.** Das Verfahren gemäß Anspruch 9, wobei das Verfahren nicht das Hinzufügen eines Löschers umfasst.

**11.** Das Verfahren gemäß einem beliebigen der obigen Ansprüche, wobei das Hinzufügen der Dihydroxyverbindung, der Carbonatverbindung und des Monomerstufen-Katalysators Folgendes umfasst: das Hinzufügen der Dihydroxyverbindung, das Hinzufügen der Carbonatverbindung, das Vermindern der Wasser- und/oder einer Alkylalkoholmenge auf eine reduzierte Menge von höchstens 450 ppm, basierend auf dem Gesamtgewicht der Carbonatverbindung, und/oder höchstens 400 ppm, basierend auf dem Gesamtgewicht der Dihydroxyverbindung; und das Hinzufügen des Monomerstufen-Katalysators, zum Beispiel, wobei der Monomerstufen-Katalysator nach dem Vermindern der Wasser- und/oder Alkylalkoholmenge auf die reduzierte Menge hinzugefügt wird.

**12.** Das Verfahren gemäß einem beliebigen der obigen Ansprüche, wobei die Carbonatverbindung höchstens 450 ppm von Wasser und/oder einem Alkylalkohol umfasst, basierend auf dem Gesamtgewicht der Carbonatverbindung; und/oder die Dihydroxyverbindung höchstens 400 ppm von Wasser und/oder einem Alkylalkohol umfasst, basierend auf dem Gesamtgewicht der Dihydroxyverbindung vor dem Hinzufügen.

**13.** Das Verfahren gemäß einem beliebigen der obigen Ansprüche, wobei der Monomerstufen-Katalysator und/oder der zweite Katalysator eine Metallverbindung umfassen, wobei das Metall mindestens eines von Natrium, Kalium, Cäsium umfasst; wobei, wenn die Metallverbindung Natriumsulfat umfasst, die Menge an Natrium 0 bis 1.690 ppm beträgt; wenn die Metallverbindung Cäsiumsulfat umfasst, die Menge an Cäsium 0 bis 275 ppm beträgt; wenn die Metallverbindung Natriumhydroxid umfasst, die Menge an Natrium 0 bis 35 ppm beträgt; wenn die Metallverbindung Kaliumhydroxid umfasst, die Menge an Kalium 0 bis 50 ppm beträgt; wenn die Metallverbindung Cäsiumhydroxid umfasst, die Menge an Cäsium 0 bis 140 ppm beträgt; alles basierend auf dem Gewicht des jeweiligen Monomerstufen-Katalysators und des zweiten Katalysators.

## Revendications

**1.** Procédé de polymérisation de polycarbonate en masse fondue, comprenant les étapes consistant à :

former un mélange catalytique dans une unité de mélange, le mélange catalytique comprenant un composé dihydroxylé, un composé carbonate et un catalyseur de stade de monomère, le catalyseur de stade de monomère comprenant l'un ou les deux parmi un composé d'ammonium quaternaire et un composé de phosphonium quaternaire autre que le phénate de tétraphénylphosphonium et l'acétate de tétraphénylphosphonium ;
introduire le mélange catalytique dans une unité d'oligomérisation et former un oligomère, et
introduire l'oligomère dans une unité de polymérisation pour former le polycarbonate,
dans lequel un second catalyseur est présent dans l'unité d'oligomérisation, le second catalyseur comprenant l'un ou les deux parmi le phénate de tétraphénylphosphonium et l'acétate de tétraphénylphosphonium.

**2.** Procédé selon la revendication 1, dans lequel le mélange catalytique comprend encore le second catalyseur.

**3.** Procédé selon l'une quelconque des revendications précédentes, comprenant encore ajouter le second catalyseur en aval de l'unité de mélange.

4. Procédé selon l'une quelconque des revendications précédentes, dans lequel on ajoute le second catalyseur à l'une ou les deux parmi une température de 100 à 280 °C et une pression supérieure ou égale à 10 kPa(a), ou dans lequel on ajoute seulement le second catalyseur à l'une ou les deux parmi la température de 100 à 280 °C et la pression supérieure ou égale à 10 kPa(a).

5. Procédé selon l'une quelconque des revendications précédentes, dans lequel on ajoute le second catalyseur à un oligomère ayant une masse moléculaire moyenne en nombre de 600 à 7 500 daltons, basée sur des étalons polycarbonate, ou dans lequel on ajoute seulement le second catalyseur à un oligomère ayant une masse moléculaire moyenne en nombre de 600 à 7 500 daltons, basée sur des étalons polycarbonate, ou dans lequel on ajoute le second catalyseur à un oligomère ayant une masse moléculaire moyenne en nombre supérieure ou égal à 600 daltons, basée sur des étalons polycarbonate.

6. Procédé selon l'une quelconque des revendications précédentes, dans lequel le catalyseur de stade de monomère comprend de l'acétate de tétrabutylphosphonium, ou dans lequel le catalyseur de stade de monomère est l'acétate de tétrabutylphosphonium.

7. Procédé selon l'une quelconque des revendications précédentes, comprenant encore ajouter un catalyseur alcalin comprenant une source de composés de métaux alcalins et/ou alcalino-terreux.

8. Procédé selon la revendication 7, dans lequel on introduit le catalyseur alcalin dans l'unité de polymérisation.

9. Procédé selon l'une quelconque des revendications 1 à 7, où le procédé ne comprend pas ajouter un catalyseur alcalin comprenant une source de composés de métaux alcalins et/ou alcalino-terreux ; ou où le procédé est exempt d'un catalyseur alcalin comprenant une source de composés de métaux alcalins et/ou alcalino-terreux.

10. Procédé selon la revendication 9, où le procédé ne comprend pas ajouter un additif d'extinction.

11. Procédé selon l'une quelconque des revendications précédentes, dans lequel le fait d'ajouter le composé dihydroxylé, le composé carbonate et le catalyseur de stade de monomère comprend ajouter le composé dihydroxylé, ajouter le composé carbonate, réduire la proportion d'eau et/ou d'un alcool alkylique jusqu'à une proportion réduite inférieure ou égale à 450 ppm par rapport au poids total du composé carbonate et/ou inférieure ou égale à 400 ppm par rapport au poids total du composé dihydroxylé ; et ajouter le catalyseur de stade de monomère, par exemple, en ajoutant le catalyseur de stade de monomère après avoir réduit la proportion d'eau et/ou la proportion d'alcool alkylique jusqu'à la proportion réduite.

12. Procédé selon l'une quelconque des revendications précédentes, dans lequel le composé carbonate comprend une proportion inférieure ou égale à 450 ppm d'eau et/ou d'un alcool alkylique, par rapport au poids total du composé carbonate ; et/ou le composé dihydroxylé comprend une proportion inférieure ou égale à 400 ppm d'eau et/ou d'un alcool alkylique, par rapport au poids total du composé dihydroxylé, avant l'addition.

13. Procédé selon l'une quelconque des revendications précédentes, dans lequel l'un ou les deux parmi le catalyseur de stade de monomère et le second catalyseur comprend/comprennent un composé métallique, le métal comprenant au moins un parmi le sodium, le potassium, le césium ; dans lequel si le composé métallique comprend le sulfate de sodium, la quantité de sodium vaut de 0 à 1 690 ppm ; si le composé métallique comprend le sulfate de césium, la quantité de césium vaut de 0 à 275 ppm ; si le composé métallique comprend l'hydroxyde de sodium, la quantité de sodium vaut de 0 à 35 ppm ; si le composé métallique comprend l'hydroxyde de potassium, la quantité de potassium vaut de 0 à 50 ppm ; si le composé métallique comprend l'hydroxyde de césium, la quantité de césium vaut de 0 à 140 ppm, toutes ces quantités étant par rapport au poids du catalyseur de stade de monomère et du second catalyseur respectifs.

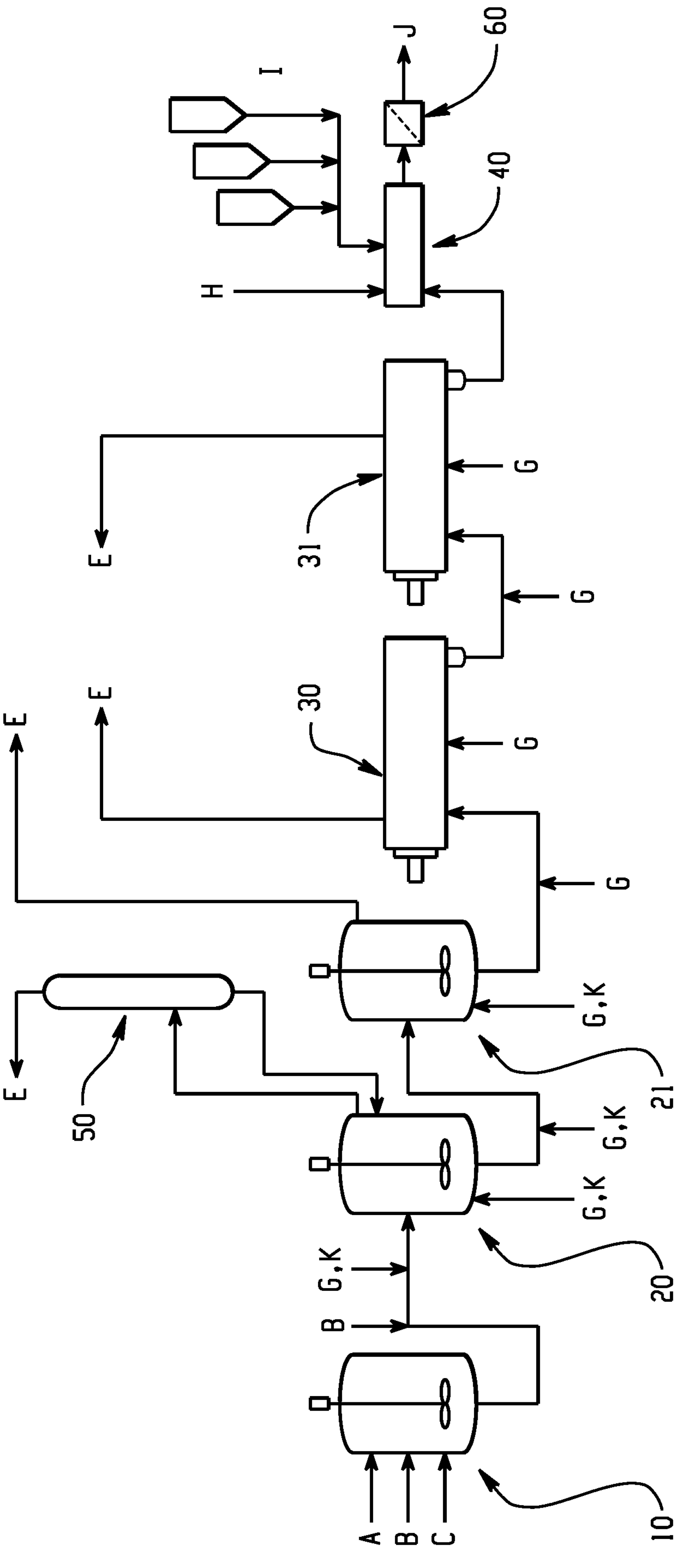
A
B
C
10
B
G,K
20
G,K
G,K
21
G,K
50
E
E
G
30
E
G
G
31
E
G
H
40
I
60
J

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2004033530 A